# EUROPEAN PATENT APPLICATION

(11) **EP 2 039 889 A2**
(43) Date of publication of application: **25.03.2009**
(21) Application number: 08164453.6
(22) Date of filing: 16.09.2008
(51) Int. Cl.: F01D 11/00, F01D 11/02, F01D 11/12

(54) **Labyrinth seal**

(30) Priority: 18.09.2007 US 857072
(71) Applicant: Honeywell International Inc., Morristown, NJ 07962 (US)
(72) Inventor: Ramerth, Douglas Lyle, Chandler AZ 85248-1815 (US); Chougule, Hasham, 400070 Kurla West (IN); Ramachandran, Dhinagaran, 560043 Bangalore (IN)
(74) Representative: Buckley, Guy Julian

(57) **Abstract**

Labyrinth seals and methods of manufacturing the seals are provided. In one embodiment, and by way of example only, the labyrinth seal (100) includes a land (108) including a plurality of cells (129, 131, 133, 135), each cell including a first half (140) of a geometric shape and a second half (142) the geometric shape, the first half (140) laterally offset relative to the second half (142).

## Description

### TECHNICAL FIELD

The inventive subject matter relates to labyrinth seals and, more particularly, to labyrinth seal lands and methods of manufacturing the lands.

### BACKGROUND

Turbines provide power for aircraft, ground vehicles, and utilities. Typically, a turbine converts potential energy of a working fluid into mechanical energy and/or propulsive thrust. The working fluid may be a liquid at high pressure, a gas at high pressure such as compressed air, or a gas at high temperature and pressure such as combustion gases, or steam. During turbine operation, a portion of the working fluid flows through a turbine along a main flow path that is defined by stationary and rotating parts that include aerodynamic vanes and blades for extracting power. Another portion of the working fluid may follow a secondary flow path used for cooling to maintain mechanical integrity of turbine components. To maintain efficiency of the turbine, various means of sealing the main and secondary flow paths may be included.

An environment in which a turbine seal operates determines the type of seal that may be used to seal the main and secondary flow paths. In cases in which abilities to withstand high temperature (e.g., greater than 200 °C) and high pressure differential (e.g., greater than 0.3 MPa) and to maintain long life while operating at close clearances are desired, a labyrinth seal may be employed. Labyrinth seals are typically mounted to a rotor and are able to accommodate high relative rotating velocities (e.g., greater than 10 meters per min.) and to tolerate transient rubbing contact where relative motion is produced by thermal growth, centrifugal growth, or vehicle maneuvering. In any case, labyrinth seals include a plurality of annular seal teeth and a land. The plurality of annular seal teeth extend from the rotor, and the land is disposed around the teeth to provide a relatively close (e.g. about 0.125 mm) radial clearance therewith.

During seal operation the seal teeth may contact the land. To allow the teeth to rub into and wear away the land without excessive damage, some lands are made of material having foil walls. The foil walls form a conventional honeycomb pattern made up of hexagonal cells. In some cases, improved sealing may be desired, so material having decreased hexagonal cell sizes may be used. However, because decreasing cell size yields a denser material, the potential of excessive heat generation, sparking, melting and galling of the annular seal tooth may increase. Although increasing the hexagonal cell size may reduce the potential for heat generation and tooth damage, seal leakage may increase which, in turn, may cause decreased engine efficiency.

Hence, it would be desirable to have a labyrinth seal that is less dense and has increased sealing capabilities over conventional labyrinth seals. Additionally, it would be desirable for the labyrinth seal to be relatively inexpensive and simple to manufacture. Moreover, it would be desirable for the labyrinth seal to be capable of being retrofitted into currently existing engines.

### BRIEF SUMMARY

The inventive subject matter provides labyrinth seals and methods of manufacturing the seals.

In one embodiment, and by way of example only, a labyrinth seal includes a land including a plurality of cells, each cell including a first half of a geometric shape and a second half the geometric shape, the first half laterally offset relative to the second half.

In another embodiment, and by way of example only, a seal includes a land, at least one annular tooth, and a seal base. The land includes a plurality of cells, each cell having a first half of a hexagon and a second half the hexagon, the hexagon having equilateral sides, and the first half laterally offset relative to the second half. The at least one annular tooth is configured to contact the land during seal operation. The annular tooth radially extends outward from the seal base.

In yet another embodiment, and by way of example only, a method is provided that includes the step of folding a first strip of material to form a plurality of halves, wherein a half comprises a first half of a geometric shape. The method may also include forming a second strip of material into a plurality of halves, wherein a half comprises a second half of the geometric shape. The method also may include attaching the first strip of material to the second strip of material such that the first half of the half of the first strip of material is laterally offset relative to the second half of the half of the second strip of material.

Other independent features and advantages of the preferred labyrinth seals and methods will become apparent from the following detailed description, taken in conjunction with the accompanying drawings which illustrate, by way of example, the principles of the inventive subject matter.

### BRIEF DESCRIPTION OF THE DRAWINGS

FIG. 1 is a cross-sectional view of a labyrinth seal disposed between a first cavity and a second cavity, according to an embodiment;

FIG. 2 is a plan view of a land that may be implemented in a labyrinth seal, according to an embodiment; and

FIG. 3 is an air flow pattern through the labyrinth seal, according to an embodiment.

### DETAILED DESCRIPTION OF A PREFERRED EMBODIMENT

The following detailed description of the inventive subject matter is merely exemplary in nature and is not intended to limit the inventive subject matter or the application and uses of the inventive subject matter. Furthermore, there is no intention to be bound by any theory presented in the preceding background or the following detailed description.

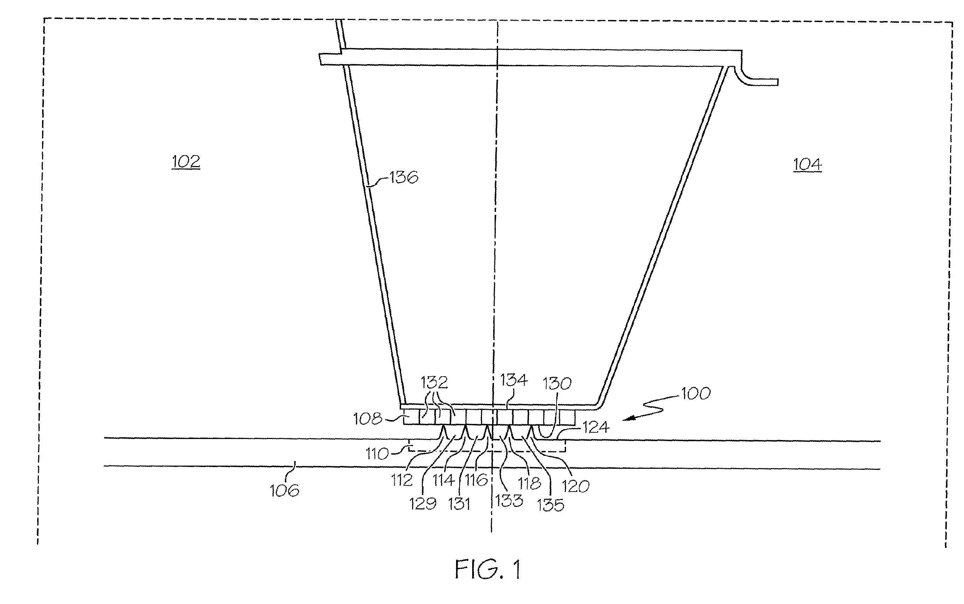

FIG. 1 is a cross-sectional view of a labyrinth seal 100 disposed between a first cavity 102 and a second cavity 104 of a device, according to an embodiment. Although seal 100 is shown in FIG. 1 as being mounted to a shaft 106, it may alternatively be mounted or formed on inserts, rings, couplings, disks, blade tip shrouds or other components. First cavity 102 may be upstream of seal 100, and may also be referred to as a higher pressure side of seal 100. Second cavity 104 may be downstream of seal 100 and may be referred to as a lower pressure side of seal 100.

Labyrinth seal 100 separates first cavity 102 from second cavity 104 and is made up of a seal base 110, at least one annular tooth, such as depicted as 112, 114, 116, 118, 120, and land 108. Seal base 110 is disposed on shaft 106 to thereby rotate therewith during seal operation. Although shown as being integrally formed as part of shaft 106, seal base 110 may alternatively be a separately formed component that may be mounted to shaft 106 (as indicated in phantom). Seal base 110 has an outer peripheral surface 124 from which annular teeth 112, 114, 116, 118, 120 extend radially. Cells 129, 131, 133, 135 are defined between adjacent annular teeth 112, 114, 116, 118, 120. In an embodiment, each cell may have a width of between about 2 mm and about 20 mm. Five annular teeth 112, 114, 116, 118, 120 are shown in this embodiment; however, as few at one tooth or many more teeth may alternatively be employed. Although each tooth 112, 114, 116, 118, 120 is depicted as having substantially equal heights, it will be appreciated that in other embodiments, such as for stepped labyrinth seals, they may have varying heights.

Land 108 cooperates with annular teeth 112, 114, 116, 118, 120 to substantially seal air in one cavity of the device. Land 108 may be attached to a backing ring (not shown) that may be attached to a support housing 122. In an embodiment, land 108 may be configured to provide a surface against which annular teeth 112, 114, 116, 118, 120 may rub, if contact occurs therebetween during seal operation. In these regards, land 108 is disposed around and at least an axial length of annular teeth 112, 114, 116, 118, 120 and a portion of land 108 extends at least within each of first and second cavities 102, 104. Land 108 is positioned such that a clearance 130 is formed with annular teeth 112, 114, 116, 118, 120. Clearance 130 may have a measurement of between about 0.05 mm and about 1 mm.

To provide improved sealing and reduced heat generation during seal 100 operation, land 108 is made up of a plurality of walls 132 that extend from a base 134. Base 134 may be attached to a stationary support or another shaft. In another embodiment, walls 132 are attached directly to a stationary support or another shaft 136. Each wall 132 of land 108 is made up of strips of material, affixed edgewise to base 134, whereby the opposite edges of which may be subjected to rubbing by an annular tooth tip. Each strip of material may be a corrugated strip of metal foil. The foil may be made of a material capable of enduring transient rubs to at least 75% of the land depth. Examples of suitable materials include, but are not limited to non-metallic and metallic materials such as alloys of aluminum, steel, nickel, and cobalt. Walls 132 may be substantially equal in height and, in an embodiment, may have a height measurement of between about 1 mm and 20 mm. In an embodiment, the walls 132 may have a height measurement that is substantially equal to a tooth height.

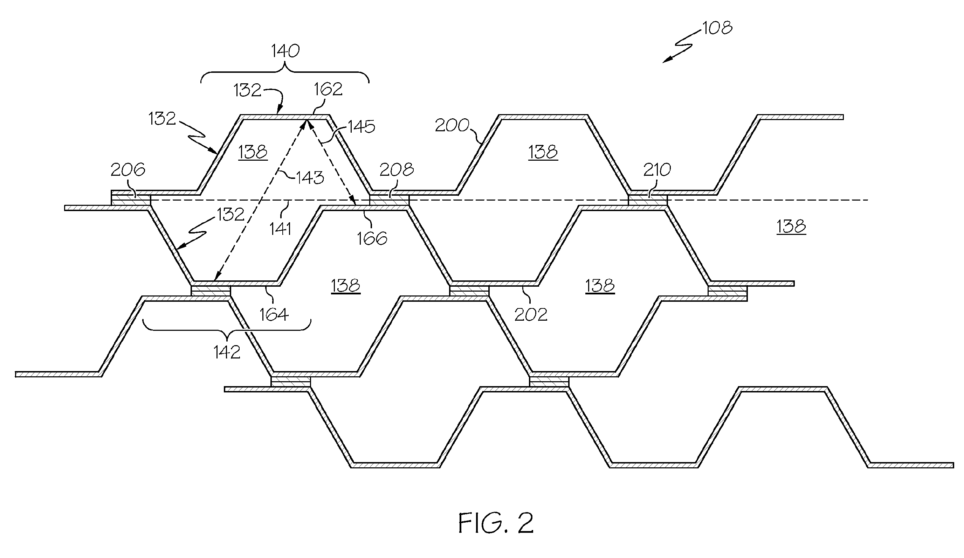

FIG. 2 is a plan view of a land 108 that may be implemented in the labyrinth seal 100, according to an embodiment. To further reduce heat and sparking generation while improving sealing capabilities as compared to conventional lands, walls 132 are disposed to define a plurality of cells 138 that form a staggered honeycomb pattern. Each cell 138 includes a first half 140 of a geometric shape and a second half 142 of the geometric shape. First half 140 of the geometric shape is disposed along and on one side of a center axis 141, and second half 142 is disposed along and on the opposite side of center axis 141. In an embodiment, second half 142 of the geometric shape is laterally off-set a distance along center axis 141 relative to first half 140. Consequently, cell 138 has a major axis 143 that extends between a first pair of opposing walls 162, 164, and a minor axis 145 that extends between a second pair of opposing walls 162, 166. In an embodiment, major axis 143 may be about twice the length of minor axis 143. Cell size may be defined as a perpendicular distance between walls 162, 164 and may have a measurement of between about 0.5 and 3.5 mm. Although first and second halves 140, 142 may be symmetrical, they do not have to be. Moreover, although first and second halves 140, 142 may have equilateral walls, the walls may alternatively have different lengths.

The geometric shape may be a polygon having any number of sides. In an embodiment, as depicted in FIG. 2, the geometric shape is a hexagon. In this embodiment, first and second halves 140, 142 are symmetrical and each has three sides. In an embodiment, each side may be equilateral. Here, first and second halves 140, 142 are laterally off-set by a distance that is substantially equal (e.g., ±5%) to about half of a length of one of the sides; however, in other embodiments, the off-set distance may be greater than or less than half of the length of one of the sides. For example, the off-set distance may be about 80% of a length of one side. Thus, in an embodiment, each side of the polygon may be about 1 mm, and the off-distance may be about 0.8 mm. No matter the off-set distance, the off-centered halves 140, 142 of the embodiment shown in FIG. 2 produce an irregular octagonal cell.

Moreover, to maximize the sealing capabilities of seal 100, land 108 may be configured to have a predetermined porosity, while allowing teeth to rub thereagainst without sustaining excessive damage. Porosity may be based on an amount of air passing over a tooth tip that may be induced to flow into cells 138 on a high pressure side of the tooth and which flows out of the cells 138 on the low pressure side of the tooth. As will be appreciated, porosity diminishes as cell size approaches zero. However, as cell size decreases, the useful life of land 108 may decrease as well. Thus, a balance between porosity and cell size may be considered in configuring land 108. In an embodiment, land 108 is configured such that a surface area of each cell 138 is increased relative to conventional lands to thereby provide a higher skin friction and greater flow turning angles along which air may flow as it enters and exits each cell 138.

As mentioned briefly above, land 108 may be manufactured from corrugated strips of material, such as a metal foil. To make land 108, a first strip of the material is folded to form a plurality of halves, wherein each half is a first half of a geometric shape. Then, a second strip of the material is formed into a plurality of halves, wherein each half is a second half of the geometric shape. Next, a first strip of material 200 is attached to a second strip of material 202 such that first half 140 formed in first strip of material 200 is laterally offset relative to second half 142 formed in second strip of material 202, an example of which is depicted in FIG. 2.

In an embodiment of the method, first strip 200 and second strip 202 are folded to form first and second halves of a hexagon. In another embodiment, strips 200, 202 are folded to form halves having equilateral sides. In still another embodiment, the step of attaching includes laterally off-setting first half 140 and second half 142 by a distance that is about half of a length of a side. In yet another embodiment, the steps of folding and forming each include the steps of folding and forming first and second strips 200, 202 to form first and second halves 140, 142 that are symmetrical.

In yet still another embodiment, the step of attaching includes brazing first strip of material 200 to second strip of material 202. As shown in FIG. 2, strips 200, 202 are joined together at braze joints 206, 208, 210 to thereby form the staggered honeycomb pattern. Brazing strips 200, 202 in this way may reduce an amount of braze material that may be used to manufacture land 108.

One or more of the above-mentioned steps may be repeated to produce land 108. For example, although four strips are shown in FIG. 2 as making up land 108, more may alternatively be used. After land 108 is formed, it may be implemented into the labyrinth seal. For example, land 108 may be used to replace the existing land of a labyrinth seal. In such case, the cells 138 of the honeycomb pattern may be oriented in any manner relative to annular teeth 112, 114, 116, 118, 120.

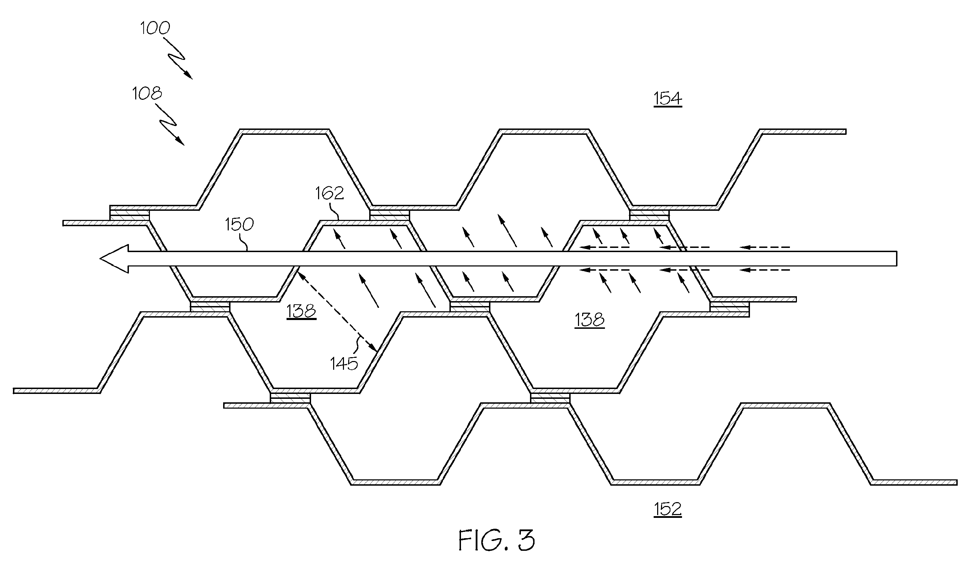

FIG. 3 is an air flow pattern through labyrinth seal 100, according to an embodiment. Land 108 includes a plurality of cells 138 that are disposed in the staggered honeycomb pattern described above. An arrow 150 indicates a direction along which an annular tooth tip (not shown) rotates. During seal operation, air may flow from a high pressure side 152 of seal 100 to a low pressure side 154 of seal 100 as it passes over the tip of a seal tooth. Such a flow pattern occurs due to the interaction between flow in the close clearance between land 108 and annular tooth tip interacting with air flow into and out of the porous cells 138. Additionally, because increased skin friction and greater turning angles exist in seal 100, seal leakage may be reduced as compared to conventional labyrinth seals. In embodiments in which the seal 100 has more than one annular tooth, the above-described operation continues across the land 108 over each successive tooth. Although arrow 150 shows the annular tooth tip as rotating in a particular direction, seal 100 may be equally as effective when the annular tooth tip is rotated in an opposite direction.

A labyrinth seal has now been provided that may have increased sealing capabilities over conventional labyrinth seals. Additionally, the labyrinth seal may be relatively inexpensive and simple to manufacture. Moreover, the labyrinth seal may be capable of being retrofitted into currently existing engines.

While the inventive subject matter has been described with reference to a preferred embodiment, it will be understood by those skilled in the art that various changes may be made and equivalents may be substituted for elements thereof without departing from the scope of the inventive subject matter. In addition, many modifications may be made to adapt to a particular situation or material to the teachings of the inventive subject matter without departing from the essential scope thereof. Therefore, it is intended that the inventive subject matter not be limited to the particular embodiment disclosed as the best mode contemplated for carrying out this inventive subject matter, but that the inventive subject matter will include all embodiments falling within the scope of the appended claims.

## Claims

1. A labyrinth seal (100) comprising:
a land (108) comprising a plurality of cells (129, 131, 133, 135), each cell comprising a first half (140) of a geometric shape and a second half (142) the geometric shape, the first half (140) laterally offset relative to the second half (142).

2. The labyrinth seal (100) of claim 1, wherein the geometric shape is a hexagon.

3. The labyrinth seal (100) of claim 1, wherein the first half (140) and the second half (142) each have a number of sides and the sides are equilateral.

4. The labyrinth seal (100) of claim 3, wherein the first half (140) and the second half (142) are laterally offset by a distance that is substantially equal to about half of a length of a side.

5. The labyrinth seal (100) of claim 1, wherein the first half (140) and the second half (142) are symmetrical.

6. The labyrinth seal (100) of claim 1, wherein the plurality of cells (129, 131, 133, 135) forms a staggered honeycomb pattern, and the land (108) further comprises a plurality of strips (200, 202) disposed in the staggered honeycomb pattern.

7. The labyrinth seal (100) of claim 6, wherein a first strip (200) of the plurality of strips (200, 202) comprises the first half (140) of the geometric shape and a second strip (202) of the plurality of strips (200, 202) comprises the second half (142) of the geometric shape.

8. The labyrinth seal (100) of claim 7, wherein at least a portion of the first strip (200) is brazed to at least a portion of the second strip (202).

9. The labyrinth seal (100) of claim 1, further comprising a seal (100) base including an annular tooth (112, 114, 116, 118, 120) extending therefrom, the annular tooth (112, 114, 116, 118, 120) configured to contact the land (108) during seal (100) operation.
